# EUROPÄISCHE PATENTSCHRIFT

(11) **EP 2 862 729 B1**
(45) Veröffentlichungstag und Bekanntmachung des Hinweises auf die Patenterteilung: **19.12.2018**
(21) Anmeldenummer: 14179211.9
(22) Anmeldetag: 31.07.2014
(51) Int. Cl.: B60C 11/12

(54) **Laufstreifenprofil eines Fahrzeugluftreifens**
Tire tread for a pneumatic tyre
Bande de roulement d'un pneu

(30) Priorität: 17.10.2013 DE 102013111471
(43) Veröffentlichungstag der Anmeldung: 22.04.2015
(73) Patentinhaber: Continental Reifen Deutschland GmbH, 30165 Hannover (DE)
(72) Erfinder: Rittweger, Stefan, 30163 Hannover (DE); Stadler, Frank, 30171 Hannover (DE); Röger, Bernhard, 30823 Garbsen (DE)
(74) Vertreter: Finger, Karsten

(56) Entgegenhaltungen:
- EP-A1- 1 157 859
- EP-A2- 0 071 809
- JP-A- 2000 289 413

## Beschreibung

Die Erfindung betrifft ein Laufstreifenprofil eines Fahrzeugluftreifens mit radial erhabenen durch Rillen begrenzten Profilpositiven - wie Profilblockelementen oder Profilrippen - , welche in radialer Richtung R nach außen hin mit einer radial äußeren, die Bodenkontaktfläche bildenden Oberfläche begrenzt werden, und mit in der radial äußeren Oberfläche von Profilpositiven ausgebildeten Feineinschnitten, welche in ihrem Erstreckungsverlauf in der radial äußeren Oberfläche aus geradlinigen mit Knickstellen verbundenen Erstreckungsabschnitten ausgebildet sind.

Derartige Fahrzeugluftreifen sind bekannt.

Für Fahrzeugluftreifen für den Wintereinsatz (Winterreifen) ist zur Erzielung guter Schneetraktionseigenschaften eine besonderes weiche Profilstruktur wünschenswert. Dies wird üblicherweise mit einer hohen Anzahl von Feineinschnitten in den radial erhabenen Profilpositiven (Profilblöcken, Profilrippen) erreicht.

Üblicherweise werden hierzu eine Vielzahl von in Umfangsrichtung des Fahrzeugluftreifens hintereinander angeordneten und über die gesamte Erstreckungsbreite der Profilblockelemente bzw. Profilrippen in axialer Richtung des Reifens geradlinig oder wellenförmig erstreckte Feineinschnitte eingesetzt. Es ist auch bekannt, derartig lang erstreckte Feineinschnitte zickzackförmig auszubilden.

Zusammen mit einer besonders weichen, für den Wintereinsatz geeigneten Gummimischung kann dann gewährleistet werden, dass sich das Laufstreifenprofil optimal mit dem Untergrund verzahnt und dies auch bei besonders niederen Temperaturen, bei denen sonstigen Gummimaterialien üblicherweise verhärten. Diese für den Wintereinsatz wünschenswerte, weiche Profilstruktur verursacht aber Nachteile hinsichtlich der Trockeneigenschaften des Reifens. In Brems- und Handlingsituationen können die in ihrer Struktur auf diese Weise relativ weich ausgebildeten Profilelemente die Kräfte nur noch begrenzt übertragen. Unter starker Beladung des Fahrzeuges wird dieser Effekt sogar noch verstärkt. Dies kommt besonders bei Transportfahrzeugen, wie z.B. Vans oder leichten Lastkraftwagen, zum Tragen.

Aus der EP 0 071 809 A2 ist es bekannt, in einem Laufstreifenprofil Reihen von Feineinschnitten auszubilden, die jeweils aus geradlinigen mit Knickstellen verbundenen Erstreckungsabschnitten ausgebildet sind, wobei der längs der Erstreckung des Feineinschnitts in Erstreckungsrichtung der Reihe erste geradlinige Erstreckungsabschnitt einen ersten Schenkel und der letzte geradlinige Erstreckungsabschnitt einen zweiten Schenkel bildet. Der erste und der zweite Schenkel sind dabei parallel zueinander ausgerichtet.

Aus der EP 1 157 859 A1 ist die Ausbildung eines Laufstreifenprofils eines Fahrzeugluftreifens gemäß den Merkmalen des Oberbegriffs von Anspruch 1 bekannt.

Der Erfindung liegt die Aufgabe zugrunde, bei einem derartigen Laufstreifenprofil mit einfachen Mitteln gute Schneegriffeigenschaften mit verbesserten Trockenbrems- und Trockenhandlingeigenschaften zu ermöglichen.

Die Aufgabe wird erfindungsgemäß durch die Ausbildung eines Laufstreifenprofils eines Fahrzeugluftreifens mit radial erhabenen durch Rillen begrenzten Profilpositiven - wie Profilblockelementen oder Profilrippen -, welche in radialer Richtung R nach außen hin mit einer radial äußeren, die Bodenkontaktfläche bildenden Oberfläche begrenzt werden, und mit in der radial äußeren Oberfläche von Profilpositiven ausgebildeten Feineinschnitten, welche in ihrem Erstreckungsverlauf in der radial äußeren Oberfläche aus geradlinigen mit Knickstellen verbundenen Erstreckungsabschnitten ausgebildet sind, bei dem in der radial äußeren Oberfläche wenigstens eines Profilpositivs wenigstens eine Reihe von in axialer Richtung nebeneinander angeordneter Feineinschnitte ausgebildet sind, wobei diese Reihe von Feineinschnitten jeweils längs ihrer Erstreckung mit der gleichen Anzahl N an geradlinigen Erstreckungsabschnitten und mit (N-1) Knickstellen ausgebildet sind, wobei der längs der Erstreckung des Feineinschnitts in Erstreckungsrichtung der Reihe erste geradlinige Erstreckungsabschnitt einen ersten Schenkel und der letzte geradlinige Erstreckungsabschnitt einen zweiten Schenkel bildet, und bei dem bei zwei in Erstreckungsrichtung der Reihe benachbart hintereinander angeordneten Feineinschnitten der Reihe jeweils der zweite Schenkel des vorgeordneten Feineinschnitts und der erste Schenkel des nachgeordneten Feineinschnitts im Abstand a zueinander angeordnet, parallel zueinander ausgerichtet und längs ihrer Erstreckungsrichtung zumindest teilweise überlappt verlaufend ausgebildet sind, wobei die beiden Schenkel eines Feineinschnittes einer Reihe jeweils V-förmig einen Öffnungswinkel α mit einander einschließen mit 60° ≤α≤ 120°, wobei erste Feineinschnitte und zweite Feineinschnitte längs der Erstreckungsrichtung der Reihe in alternierender Abfolge hintereinander angeordnet sind und wobei die Öffnung des von den beiden Schenkel der ersten Feineinschnitte eingeschlossenen Winkels in entgegengesetzter Richtung zur Öffnung des von den beiden Schenkel der zweiten Feineinschnitte eingeschlossenen Winkels ausgerichtet ist, wobei zwischen den beiden Schenkeln der Feineinschnitte der Reihe jeweils ein geradliniger Erstreckungsabschnitt ausgebildet ist, welcher an einem Erstreckungsende durch eine Knickstelle mit dem einen Schenkel und an seinem anderen Erstreckungsende durch eine Knickstelle mit dem anderen Schenkel verbunden ist, so dass der Feineinschnitt mit seinem Verlauf in der radial äußeren Oberfläche mit seinen Schenkeln, dem geradlinigen Erstreckungsabschnitt und den beiden Knickstellen eine Trapezform bildet.

Durch eine derartige Ausbildung wirkt die Reihe von Feineinschnitten wie ein einziger längs der Erstreckung der Reihe ausgebildeter sehr langer Feineinschnitt mit einer großen wirksamen Kantenlänge, wie sie bei herkömmlichen wellenförmigen oder zickzackförmigen lang erstreckten Feineinschnitten möglich ist. Durch die Ausbildung können in einfacher Weise hochwirksame Griffkanten sowohl in axialer Richtung A als auch in Umfangsrichtung U und zwar längs der gesamten Erstreckung der Reihe umgesetzt werden. Die Ausbildung der Überlappung der zueinander parallel ausgerichteten Schenkel mit Abstand a wird im Erstreckungsbereich der Reihe eine unmittelbare Gummimaterialverbindung bis zur radial äußeren Oberfläche hin gewährleitet, die zwischen den Schenkeln einen Steg ausbildet, der sich durch die Reihe hindurch erstreckt. Hierdurch kann eine erhöhte Materialsteifigkeit des Profilelementes sichergestellt werden bei zusätzlicher Verdoppelung der wirksamen Griffkanten aufgrund der überlappten Ausbildung der parallelen Schenkel. Hierdurch können Profilpositive mit einem höheren Widerstand gegen ein unerwünschtes Weg- oder Einknicken beim Trockenbremsen oder beim Trockenhandling und somit auch für eine bessere Kraftübertragung beim Trockenbremsen und beim Trockenhandlung ausgebildet werden und zusätzlich mit verbesserter Schneegriffwirkung. Darüber die hinaus wird eine besonders homogene Verteilung der Feineinschnitte ermöglicht, wodurch eine gleichmäßige Blocksteifigkeit des Profilblockelementes bei besonders dichter Anordnung der Feineinschnitte umgesetzt werden kann. Durch die Trapezform kann zusätzlich eine besonders lange, wirksame Querkante mit umgesetzt werden, die gute Schnee- und Nässetraktion zusätzlich begünstigt.

Somit können in einfacher Weise durch diese Ausbildung bei derartigen Laufstreifenprofilen verbesserte Trockenbrems- und Trockenhandlingeigenschaften bei besonderes guten Schneegriffeigenschaften auch bei Fahrzeugen mit höherer Last, wie z.B. Vans oder Leichtlastkraftwagen, umgesetzt werden.

Besonders vorteilhaft ist die Ausbildung eines Laufstreifenprofils gemäß den Merkmalen von Anspruch 2, wobei die Schenkel mit einer in Erstreckungsrichtung des jeweiligen Schenkels gemessenen Erstreckungslänge L mit 2mm ≤L≤ 10mm ausgebildet sind.

Besonders vorteilhaft ist die Ausbildung eines Laufstreifenprofils gemäß den Merkmalen von Anspruch 3, wobei die Überlappung des zweiten Schenkels eines vorgeordneten Feineinschnitts und des ersten Schenkels des nachgeordneten Feineinschnitts einer Reihe mit einer in Erstreckungsrichtung dieser beiden Schenkel gemessenen Überlappungslänge K mit 2mm ≤K≤ L ausgebildet ist. Die Ausbildung ermöglicht in einfacher Weise eine hohe Dichte von wirksamen Griffkanten im Profilelement.

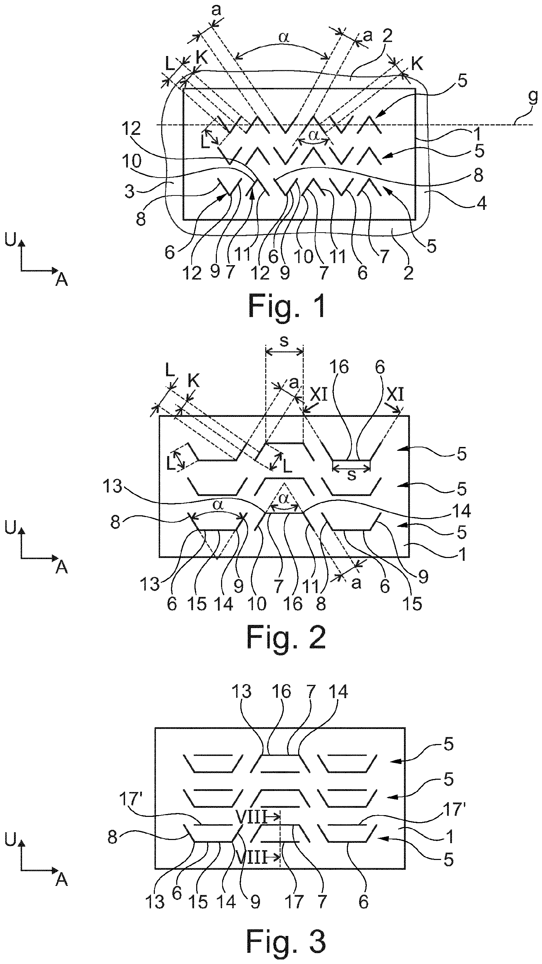

Besonders vorteilhaft ist die Ausbildung eines Laufstreifenprofils gemäß den Merkmalen von Anspruch 4, wobei der mittlere, zwischen den Schenkeln ausgebildete geradlinige Erstreckungsabschnitt mit einer längs seiner Erstreckungsrichtung gemessenen Erstreckungslänge S mit 5mm ≤ S ≤ 15 mm ausgebildet ist. Durch diese Ausbildung wird es ermöglicht durch die Einstellung der Erstreckungslänge S die wirksame Griffkante zur Übertragung von Umfangskräften im relevanten Bereich individuell optimiert einzustellen. Die Erfindung wird im Folgenden an Hand der in den Figuren 1 bis 13 dargestellten Ausführungsbeispiele eines Fahrzeugluftreifens für Van- bzw. leichten Lastkraftwagen näher erläutert, wobei es sich bei den Figuren 1, 5 sowie 6 um nicht erfindungsgemäße Ausführungen handelt. Hierin zeigen
- Fig.1: eine Draufsicht auf ein Profilblockelement einer Profilblockreihe eines Laufstreifenprofils mit einer nicht erfindungsgemäßen Ausbildung von Reihen von Feineinschnitten,
- Fig.2: eine Draufsicht auf ein Profilblockelement einer Profilblockreihe einer erfindungsgemäßen Ausführung der Feineinschnitte,
- Fig.3: eine Draufsicht auf ein Profilblockelement mit Reihen von Feineinschnitten in alternativer Ausführung,
- Fig.4: eine Draufsicht auf ein Profilblockelement mit alternativer Ausführung der Feineinschnitte,
- Fig.5: eine Draufsicht auf ein Profilblockelement einer nicht erfindungsgemäßen Ausführung der Feineinschnitte,
- Fig.6: eine Draufsicht auf ein Profilblockelement einer nicht erfindungsgemäßen Ausführung der Feineinschnitte,
- Fig.7: eine Draufsicht auf ein Laufstreifenprofil mit vier Profilbockreihen mit Profilblockelementen, in welchen jeweils beispielhaft an verschiedenen Profilblockelementen die in den Figuren 1 bis 6 dargestellten Feineinschnitte ausgebildet sind,
- Fig.8: eine Darstellung der Feineinschnitte von Fig.3 in Querschnittdarstellung gemäß Schnitt VIII-VIII von Fig.3,
- Fig.9: eine Darstellung der Feineinschnitte von Fig.4 in Schnittdarstellung gemäß Schnitt IX-IX von Fig.4,
- Fig.10: eine Darstellung der Feineinschnitte von Fig.6 in Schnittdarstellung gemäß Schnitt X-X von Fig.6,
- Fig.11: eine Darstellung der Feineinschnitte von Fig.2 in Schnittdarstellung gemäß Schnitt XI-XI von Fig.2, die den Schnitt längs der Erstreckung eines Feineinschnittes von Fig.2 zur Erläuterung des Tiefenverlaufs zeigt,
- Fig.12: eine analoge Darstellung zur Fig.11 mit alternativer Ausführung des Tiefenverlaufes der Feineinschnitte von Fig.2 und
- Fig.13: eine analoge Darstellung zur Fig.11 mit alternativer Ausführung des Tiefenverlaufes der Feineinschnitte von Fig.2.

Fig.1 zeigt ein Profilblockelement 1 einer in bekannter Weise in Umfangsrichtung U eines Fahrzeugluftreifens ausgerichteten und über den Umfang des Fahrzeugluftreifens erstreckten Profilblockreihe. Die Profilblockreihe ist dabei in bekannter Weise aus einer Vielzahl von über den Umfang des Fahrzeugluftreifens verteilt und in Umfangsrichtung U hintereinander angeordneten Profilblockelementen 1 ausgebildet, die jeweils in bekannter Weise durch Querrillen 2 in Umfangsrichtung U voneinander beabstandet sind. In Fig.1 ist zu erkennen, dass das Profilblockelement 1 in Umfangsrichtung U zu beiden Seiten hin jeweils durch eine Querrille 2 begrenzt ist. Das Profilblockelement 1 ist in axialer Richtung A zur einen Seite hin durch eine über den Umfang des Fahrzeugluftreifens erstreckte Umfangsrille 3 und zur anderen Seite hin durch eine über den gesamten Umfang des Fahrzeugluftreifens erstreckte Umfangsrille 4 begrenzt. Das Profilblockelement 1 ist in radialer Richtung R des Fahrzeugluftreifens nach außen hin durch eine radial äußere Oberfläche 18 begrenzt, auf welche in der als Fig.1 dargestellten Draufsicht der Blick gerichtet ist.

In der radial äußeren Oberfläche 18 des Profilblockelementes 1 sind in Umfangsrichtung U des Fahrzeugluftreifen hintereinander angeordnet mehrere Reihen 5 von in axialer Richtung A des Fahrzeugluftreifens nebeneinander angeordneten Feineinschnitten 6 und 7 angeordnet. Die Reihen 5 erstrecken sich im dargestellten Ausführungsbeispiel von Fig.1 jeweils längs einer Geraden g welche in axialer Richtung A ausgerichtet ist. In jeder Reihe 5 sind längs der Erstreckung der Reihe 5 in axialer Richtung A ausgehend von der in Fig.1 dargestellten linken Seite bis zur in Fig.1 dargestellten rechten Seite in alternierender Abfolge erste Feineinschnitte 6 und zweite Feineinschnitte 7 hintereinander angeordnet.

Dabei sind die Feineinschnitte 6 in ihrem Erstreckungsverlauf in der radial äußeren Oberfläche 18 jeweils aus zwei einen Winkel α einschließenden, geradlinig erstreckten Schenkeln 8 und 9 V-förmig ausgebildet. Ebenso sind die Feineinschnitte 7 in ihrem Erstreckungsverlauf in der radial äußeren Oberfläche 18 jeweils aus zwei einen Winkel α einschließenden Schenkeln 9 und 11V-förmig ausgebildet. Dabei schneiden sich in der radial äußeren Oberfläche 18 die Schenkel 8 und 9 des Feineinschnitts 6 und bilden in der Schnittstelle eine Knickstelle 12 des Verlaufs des Feineinschnitts 6. Ebenso schneiden sich in der radial äußeren Oberfläche 18 die Schenkel 10 und 11 des Feineinschnitts 7 und bilden in ihrer Schnittstelle jeweils eine Knickstelle 12 des Verlaufs des Feineinschnitts 7.

Wie in Figur 1 zu erkennen ist, sind die Feineinschnitte 6 dabei mit ihren Schenkeln 8 und 9 ausgehend von ihrer Knickstelle 12 jeweils zu einer in Fig.1 nach oben hin zeigenden Umfangserstreckungsrichtung hin geöffnet. Die Feineinschnitte 7 mit ihren Schenkeln 10 und 11 ausgehend von ihrer Knickstelle 12 in die hierzu entgegengesetzte, in Fig.1 nach unten hin zeigenden Umfangserstreckungsrichtung hin geöffnet. Die Schenkel 8 und 9 der Feineinschnitte 6 sowie die Schenkel 10 und 11 der Feineinschnitte 7 sind dabei jeweils mit einer in der radial äußeren Oberfläche 18 längs der Erstreckungsrichtung des jeweiligen Schenkels 8,9,10 bzw.11 gemessenen Erstreckungslänge L ausgebildet.

Die Feineinschnitte 6 und 7 einer Reihe 5 sind längs der Erstreckung der Reihe 5 dabei derart hintereinander angeordnet, dass längs der Erstreckungsrichtung der Reihe 5 von links nach rechts ausgehend von der linken Seite zur rechten Seite hin der jeweils zum nachgeordnet benachbarten Feineinschnitt 7 hinweisende Schenkel 9 eines Feineinschnitts 6 im Abstand a parallel zu dem zum Feineinschnitt 6 hinweisenden Schenkel 10 des Feineinschnitts 7 ausgerichtet angeordnet ist. Diese beiden parallelen Schenkel 9 und 10 sind dabei längs ihrer Erstreckungsrichtung mit einer Erstreckungslänge K mit K< L überlappt zueinander angeordnet. Darüber hinaus ist der längs der Erstreckungsrichtung der Reihe 5 von links nach rechts ausgehend von der linken Seite zur rechten Seite hin der jeweils zum nachgeordnet benachbarten Feineinschnitt 6 hinweisende Schenkel 11 eines Feineinschnitts 7 im Abstand a parallel zu dem zum Feineinschnitt 7 hinweisenden Schenkel 8 des Feineinschnitts 6 ausgerichtet angeordnet ist. Diese beiden parallelen Schenkel 8 und 11 sind dabei längs ihrer Erstreckungsrichtung ebenfalls mit der Erstreckungslänge K mit K< L überlappt zueinander angeordnet.

Im dargestellten Ausführungsbeispiel sind die Knickstellen 12 der Feineinschnitte 7 auf einer gemeinsamen Geraden angeordnet mit den Erstreckungsenden der Schenkel 8 und 9 der Feineinschnitte 6 der Reihe 5. Ebenso sind die Knickstellen 12 der Feineinschnitte 6 auf einer gemeinsamen Geraden mit den Erstreckungsenden der Schenkel 10 und 11 der Feineinschnitte 7 der Reihe 5 angeordnet.

Der Winkel α ist mit 60°≤α≤120° ausgebildet. Im dargestellten Ausführungsbeispiel ist α =85° gewählt.

Die Erstreckungslängen L der Schenkel 8,9,10,11 sind mit 2mm≤L≤10mm gewählt ausgebildet. Im dargestellten Ausführungsbeispiel ist L = 5 mm gewählt. Die Überlappungslänge K ist mit 2mm≤K≤L ausgebildet. Im dargestellten Ausführungsbeispiel ist K mit K=3mm ausgebildet.

Fig.2 zeigt ein alternatives Ausführungsbeispiel der Reihen 5 von Feineinschnitten 6 und 7, bei welchem die Feineinschnitte 6 und 7 in ihrem Verlauf in der radial äußeren Oberfläche 18 zwischen den V-förmig aufgespreizten Schenkeln 8 und 9 des Feineinschnitts 6 und zwischen den V-förmig aufgespreizten Schenkeln 10 und 11 des Feineinschnitts 7 jeweils mit einem zusätzlichen geradlinig erstreckten, mittleren Erstreckungsabschnitt 15 bzw. 16 ausgebildet sind. Wie in Fig.2 zu erkennen ist, geht der Schenkel 8 des Feineinschnitts 6 in einer Knickstelle 13 in den geradlinig erstreckten, mittleren Erstreckungsabschnitt 15 der Erstreckungslänge S über, welcher am anderen Ende seiner Erstreckung im Abstand s von der Knickstelle 13 in der Knickstelle 14 in den Schenkel 9 übergeht. Ebenso geht der Schenkel 10 des Feineinschnitts 7 an einer Knickstelle 13 in den geradlinig erstreckten, mittleren Erstreckungsabschnitt 16 der Erstreckungslänge S über, welcher am anderen Ende seiner Erstreckung im Abstand s von Knickstelle 13 in einer Knickstelle 14 in den Schenkel 11 übergeht. Die geradlinig erstreckten mittleren Erstreckungsabschnitte 15 und 16 der Feineinschnitte 6 und 7 der Reihe 5 sind dabei parallel zueinander ausgerichtet. Die Feineinschnitte 6 und 7 sind auf diese Weise trapezförmig (offenes Trapez) ausgebildet, wobei die Schenkel 8 und 9 wieder unter Einschluss eines Öffnungswinkels α in die eine Umfangserstreckungsrichtung hin und die Schenkel 10 und 11 unter Einschluss des Öffnungswinkels α zur anderen Umfangserstreckungsrichtung hin geöffnet sind. Wie im Ausführungsbeispiel von Fig.1 sind die benachbarten Schenkel 9 eines Feineinschnittes 6 und 10 des nachfolgenden Feineinschnittes 7 im Abstand a parallel zueinander ausgerichtet und in ihrer Erstreckung längs ihrer Erstreckungsrichtung mit der Erstreckungslänge K überlappt angeordnet. Die Ausbildung der Maße a, K, L sowie α sind wie im Zusammenhang mit der Ausbildung nach Fig.1 angegeben gewählt. Die Erstreckungslänge S ist mit 5mm≤S≤15mm gewählt. Im dargestellten Ausführungsbeispiel ist S=10mm gewählt.

Die Trapezform ist eine offene Trapezform, bei welcher der Feineinschnitt 6,7 jeweils mit seinem mittleren Erstreckungsabschnitt 15,16 die kurze Grundseite und mit seinen Schenkeln 8,9,10,11 die Seiten bildet. Die lange Grundseite ist die gedachte Verbindungsstrecke zwischen den beiden vom mittleren Erstreckungsabschnitt 15,16 wegweisenden Schenkelenden.

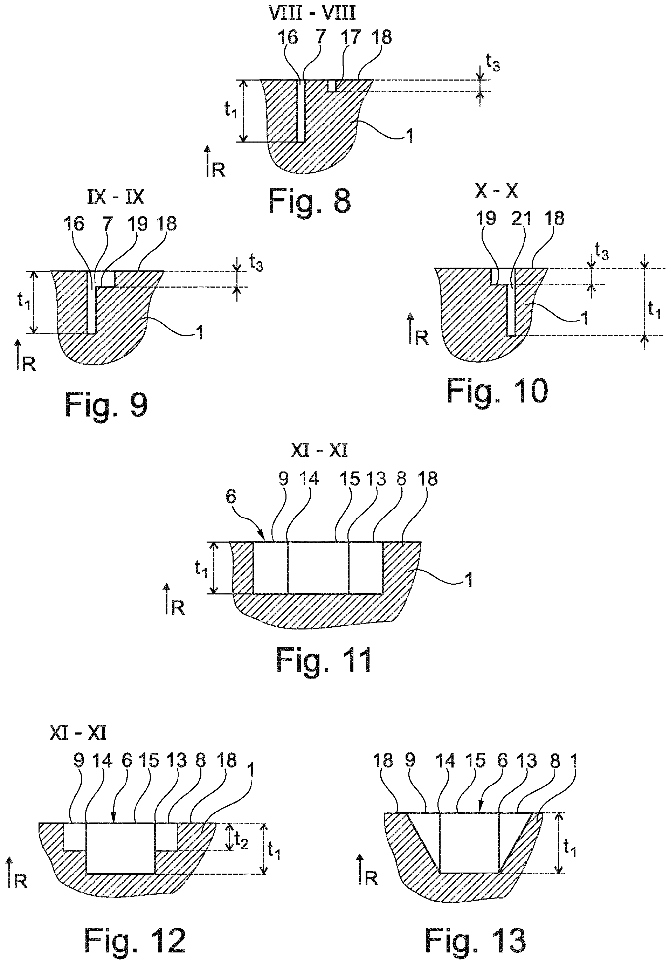

Fig.3 zeigt ein Ausführungsbeispiel eines Profilblockelementes 1, bei dem die Reihen 5 im Wesentlichen wie die in Fig.2 dargestellten und beschriebenen Reihen aus alternierend hintereinander angeordneten trapezförmig ausgebildeten Feineinschnitten 6 und 7 ausgebildet sind. In dem in Fig.3 und in Fig.8 dargestellten Ausführungsbeispiel ist jedoch jeweils parallel zum mittleren Erstreckungsabschnitt 16 eines Feineinschnittes 7 ein Feineinschnitt 17 ausgebildet, welcher sich zwischen den beiden Schenkeln 10 und 11 des Feineinschnittes 7 erstreckt und im Abstand zu den Schenkeln 11 und 12 endet. Ebenso ist parallel zum mittleren Erstreckungsabschnitt 15 des Feineinschnittes 6 jeweils zwischen den Schenkeln 8 und 9 des Feineinschnittes 6 ein Feineinschnitt 17' ausgebildet, welcher mit Abstand zu den Schenkeln 8 und 9 endet. Im dargestellten Ausführungsbeispiel liegen die Feineinschnitte 17' einer Reihe 5 und die mittleren Erstreckungsabschnitte 16 der Feineinschnitte 7 der gleichen Reihe 5 jeweils auf einer gemeinsamen Geraden. Ebenso liegen die Feineinschnitte 17 einer Reihe 5 und die mittleren Erstreckungsabschnitte 15 der Feineinschnitte 6 der gleichen Reihe 5 jeweils auf einer gemeinsamen Geraden. Wie in Fig.8 zu erkennen ist, sind die Feineinschnitte 7 und 6 zumindest mit ihren mittleren Erstreckungsabschnitten 16 und 15 jeweils mit einer in radialer Richtung R von der radial äußeren Oberfläche 18 aus gemessenen Tiefe t₁ ausgebildet und die Feineinschnitte 17 und 17' mit einer in radialer Richtung R gemessenen Tiefe t₃ mit t₃<(0,5 t₁).

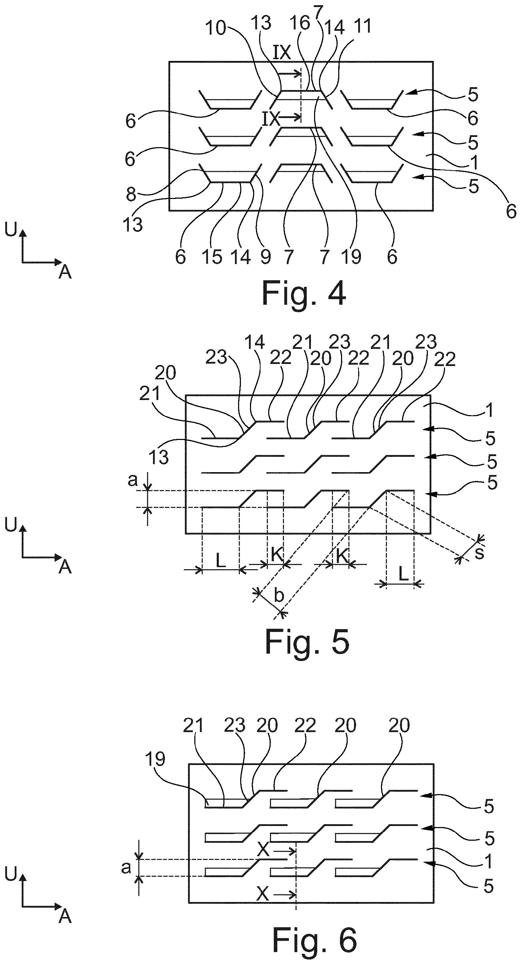

In Fig.4 ist ein weiteres Ausführungsbeispiel eines Profilblockelementes 1 dargestellt, in welchem die Reihen 5 mit ihren Feineinschnitten 6 und 7 im Wesentlichen wie die im Zusammenhang Fig.2 dargestellten und beschriebenen Reihen 5 ausgebildet sind. Allerdings ist bei diesem Ausführungsbeispiel - wie in Fig.4 und Fig.9 dargestellt -in dem von der Trapezform eines Feineinschnitts 7 umgegebenen Gummimaterial ausgehend von dem jeweiligen mittleren Erstreckungsabschnitt 16 eines Feineinschnitts 7 jeweils eine nutförmige Vertiefung 19 ausgebildet ist, welche sich längs des jeweiligen mittleren Erstreckungsabschnittes 16 ausgehend von dem Schenkel 11 des Feineinschnittes 7 bis zum Schenkel 19 des Feineinschnittes 7 erstreckt. Ebenso ist bei diesem Ausführungsbeispiel in dem von der Trapezform eines Feineinschnitts 6 umgegebenen Gummimaterial ausgehend von dem jeweiligen mittleren Erstreckungsabschnitt 15 eines Feineinschnitts 6 jeweils eine nutförmige Vertiefung 19 ausgebildet ist, welche sich längs des jeweiligen mittleren Erstreckungsabschnittes 15 ausgehend vom Schenkel 9 des Feineinschnittes 6 bis zum Schenkel 8 des Feineinschnittes 6 erstreckt. In den Querschnitten senkrecht zum jeweiligen mittleren Erstreckungsabschnitts 16 bzw. 15 ist - wie in Fig.9 zu erkennen ist - hierdurch ein treppenförmiger Absatz ausgebildet. Ausgehend vom mittleren Erstreckungsabschnitt 16 des Feineinschnittes 7 erstreckt sich die nutförmige Vertiefung 19 des Feineinschnittes 7 lediglich bis in eine Position, die zwischen Erstreckungsende der Schenkel 10 und 11 und dem mittleren Erstreckungsabschnitt 16 liegt. Ebenso erstreckt sich die nutförmige Vertiefung 19 der Feineinschnitte 6 ausgehend von deren mittleren Erstreckungsabschnitt 15 längs der Schenkel 8 und 9 lediglich bis eine Position, die zwischen dem mittleren Erstreckungsabschnitt 15 und dem Erstreckungsende der Schenkel 8 und 9 liegt. Im dargestellten Ausführungsbeispiel erstreckt sich das von dem mittleren Erstreckungsabschnitt 15 in Erstreckungsrichtung längs der Schenkel 8 und 9 ausgebildete Erstreckungsende der Nut 19 des Feineinschnittes 6 einer Reihe 5 und ebenso das vom mittleren Erstreckungsabschnitt 17 in Erstreckungsrichtung längs der Schenkel 10 und 11 ausgebildete Erstreckungsende der Nut 19 des Feineinschnittes 7 der Reihe 5 auf einer längs der Erstreckungsrichtung der Reihe 5 erstreckten gemeinsamen Geraden.

Fig.5 zeigt die Draufsicht auf ein Profilblockelement 1 mit den Reihen 5 von Feineinschnitten 20. Bei dieser Ausführung sind jeweils längs der Erstreckungsrichtung einer Reihe 5 hintereinander angeordnete Feineinschnitten 20 ausgebildet. Die Feineinschnitte 20 sind jeweils mit einem zwischen zwei Knickstellen 13 und 14 des Verlaufs ausgebildeten mittleren Erstreckungsabschnitt 23 ausgebildet. Im Anschluss an die Knickstelle 13 ist der Verlauf des Feineinschnitts 20 auf der einen, in Fig.5 zur linken Seite hin- und vom mittleren Erstreckungsabschnitt 23 wegweisenden axialen Erstreckungsrichtung als geradlinig erstreckter Schenkel 21 ausgebildet. Im Anschluss an die Knickstelle 14 ist der Verlauf des Feineinschnitts 20 auf der anderen, in Fig.5 zur rechten Seite hin und vom mittleren Erstreckungsabschnitt 23 wegweisenden axialen Erstreckungsrichtung als geradlinig erstreckter Schenkel 22 ausgebildet. Der mittlere Erstreckungsabschnitt 23 ist somit zwischen den beiden Schenkeln 21 und 22 ausgebildet und jeweils mit einer Knickstelle 13 oder 14 mit dem an die Knickstelle 13 bzw.14 anschließend angeordneten Schenkel 21 bzw. 22 verbunden. Die beiden Schenkel 21 und 22 sind jeweils parallel zueinander und zur Erstreckungsrichtung der Reihe 5 ausgerichtet und mit einer in Erstreckungsrichtung der Schenkel 21 bzw. 22 gemessenen Erstreckungslänge L ausgebildet. Der mittlere Erstreckungsabschnitt 23 bildet somit ausgehend vom Erstreckungsverlauf des Schenkels 21 zum Erstreckungsverlauf des Schenkels 22 hin einen Versatz des Verlaufes des Feineinschnitts 20 mit dem in Richtung senkrecht zur Erstreckungsrichtung der Reihe 5gemessenen Versatzmaß a. Die Schenkel 21 der hintereinander angeordneten Feineinschnitte einer Reihe 5 liegen jeweils mit Erstreckung alle auf einer gemeinsamen Geraden. Die Schenkel 22 der hintereinander angeordneten Feineinschnitte 20 der Reihe 5 liegen ebenfalls alle jeweils auf einer gemeinsamen Geraden. Längs der Erstreckungsrichtung der Reihe 5 ist - in der Darstellung von Fig.5 ausgehend von der linken zur rechten Seite hin - somit jeweils der in Erstreckungsrichtung zu einem unmittelbar nachfolgend angeordneten Feineinschnitt 20 hinweisende Schenkel 22 eines ersten Feineinschnitts 20 im Abstand a und parallel zu dem zum ersten Feineinschnitts 20 hinweisenden Schenkel 21 des nachfolgenden Feineinschnitts 20 unter einer längs seiner Erstreckungsrichtung ausgebildeten Überlappung der Erstreckung mit der Überlappungslänge K ausgebildet. Dabei endet der Schenkel 22 eines Feineinschnittes jeweils im Abstand b zum mittleren Erstreckungsabschnitt 23 des nachfolgend angeordneten Feineinschnitts 20. Ebenso endet der der Schenkels 21 jeweils im Abstand b zum mittleren Erstreckungsabschnitt 23 eines vorgeordnet angeordneten Feineinschnitts 20.

Die mittleren Erstreckungsabschnitte 23 sind - wie in den vorangegangen, dargestellten und beschriebenen Ausführungsbeispielen - jeweils mit einer Erstreckungslänge S ausgebildet. Die Schenkel 21 und 22 sind jeweils mit einer Erstreckungslänge L ausgebildet. Für die Erstreckungslängen L und S sowie für die Überlappungslänge K und den Abstand a gelten die in den vorangegangenen Beispielen genannten Dimensionierungen. Der Abstand b ist mit 3 mm≤b≤8mm ausgebildet. Beispielsweise ist b mit b=7mm ausgebildet.

Die Figuren 6 und 10 zeigen ein Ausführungsbeispiel eines Profilblockelementes 1, das - wie in Figur 5 dargestellt und hierzu beschrieben - mit Reihen 5 mit hintereinander angeordneten Feineinschnitten 20 ausgebildet ist. Bei diesem Ausprüfungsbeispiel sind lediglich zusätzlich parallel zu den Schenkeln 21 unmittelbar längs der Erstreckung der Schenkel 21erstreckt ausgebildete schmale Nuten 19 ausgebildet. Die schmalen Nuten 19 sind mit einer Nutbreite ausgebildet, die kleiner ist als der Abstand a. Beispielsweise ist die Nutbreite mit (0,5 a) ausgebildet. Die Nut 19 erstreckt sich dabei längs der gesamten Erstreckung des Schenkels 21 bis zum mittleren Erstreckungsabschnitt 2. Wie in Fig.10 zu erkennen ist, ist die Nut 19 mit einer Nuttiefe t₃ ausgebildet. In den senkrecht zur Erstreckungsrichtung der Schenkel 21 ausgebildeten Schnittebenen bildet der Feineinschnitt 20, die Nut 19 und die radial äußere Oberfläche 18 einen treppenförmigen Schnittkonturverlauf. Die Nuttiefe t₃ ist wie bereits im Zusammenhang mit dem in Fig.9 dargestellten Ausführungsbeispiel beschrieben dimensioniert.

Die in den Figuren 1 bis 6 dargestellten und erläuterten Feineinschnitte 6, 7 und 20 sind jeweils in einer Ausführung längs ihrer gesamten Erstreckung ausgehend von einem Schenkel bis zum anderen Schenkel hin mit konstanter in radialer Richtung R von der radial äußeren Oberflächen ausgehend nach innen hin gemessenen Tiefe t₁ ausgebildet. Ein solches Ausführungsbeispiel ist beispielsweise in Fig.11 am Beispiel der Feineinschnitte 6 von Fig.2 dargestellt. Fig.11 zeigt - wie in Fig.2 durch die römischen Zahlen XI-XI angedeutet - den Schnitt längs der Erstreckung des Feineinschnittes 6 und somit die Darstellung des Tiefenverlaufs sowohl der Schenkel 8 und 9 als auch des mittleren Erstreckungsabschnitts 15. In Fig.11 ist deutlich zu erkennen, dass sowohl längs der Erstreckung der Schenkel 8 und 9 als auch längs der Erstreckung des mittleren Erstreckungsabschnitts 15 der Feineinschnitt 6 in seiner gesamten Erstreckung mit konstanter Tiefe t₁ ausgebildet ist.

Fig.12 zeigt ein anderes Ausführungsbeispiel des Tiefenverlaufes, ebenfalls anhand des Feineinschnittes 6 von Fig.2, bei welchem der Feineinschnitt 6 im mittleren Erstreckungsabschnitt 15 jeweils mit einer konstanten Tiefe t₁ und in den beiden Schenkeln 8 und 9 mit einer gegenüber der Tiefe t₁ reduzierten konstanten Tiefe t₂ ausgebildet ist. Beispielsweise ist t₂=(0,5 t₁).

Fig.13 zeigt ein weiteres alternatives Ausführungsbeispiel des Tiefenverlaufes, ebenfalls anhand des Feineinschnittes 6 von Fig.2, bei welchem der Feineinschnitt 6 im mittleren Erstreckungsabschnitt 15 mit der konstanten Tiefe t₁ ausgebildet ist. Ausgehend von der Position der Knickstelle 13 ist der Schenkel 8 längs seiner vom mittleren Erstreckungsabschnitt 15 wegweisenden Erstreckung mit einer kontinuierlich abnehmenden Tiefe ausgebildet. Ebenso ist ausgehend von der Position der Knickstelle 14 der Schenkel 9 längs seiner vom mittleren Erstreckungsabschnitt 15 wegweisenden Erstreckung mit einer kontinuierlich abnehmenden Tiefe ausgebildet.

In analoger Weise sind auch die Feineinschnitte 20 der Figuren 5 und 6 in einer Ausführung längs ihrer gesamten Erstreckung mit konstanter Tiefe t₁ ausgebildet. In anderer Ausführung sind in analoger Weise die Schenkel 22 und 21 der Feineinschnitte 20 mit einer konstanten geringeren Tiefe als der mittlere Erstreckungsabschnitt 23 ausgebildet. In einer weiteren alternativen Ausbildung ist in analoger Weise der mittlere Erstreckungsabschnitt 23 des Feineinschnitts 20 längs seiner Erstreckung mit konstanter Tiefe t₁ und ausgehend von der Knickstelle 14 bzw. 13der jeweilige Schenkel 22 bzw. 21 längs seiner gesamten Erstreckung mit abnehmender Tiefe ausgebildet.

In analoger Weise ist auch die Ausbildung der Feineinschnitte 6 und 7 von Fig.1 mit einer längs der gesamten Erstreckung der Feineinschnitte 6 und 7 konstanten Tiefe t₁ oder aber mit einer sich verändernden Tiefe - beispielsweise mit einer ausgehend von der Knickstelle 12 bzw. 11 längs der Erstreckung der jeweiligen Schenkel 8, 9, 10, 11-abnehmenden Tiefe ausgebildet.

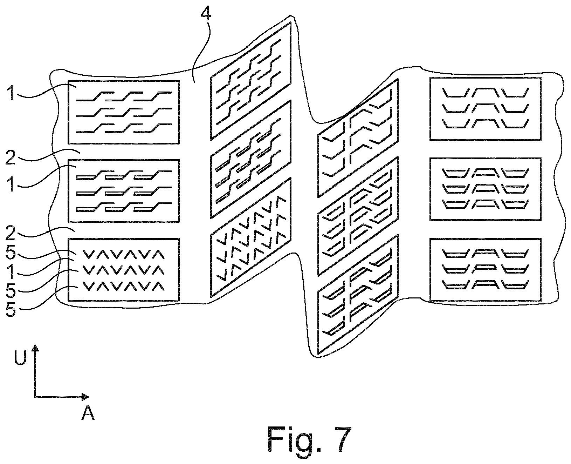

Fig.7 zeigt die Draufsicht auf ein Laufstreifenprofil mit vier in axialer Richtung A des Reifens nebeneinander angeordneten Profilblockreihen, die jeweils durch Umfangsrillen voneinander getrennt sind. Die Profilblockreihen sind in bekannter Weise aus über den Umfang des Fahrzeugluftreifens verteilten, in der Umfangsrichtung U hintereinander angeordneten und jeweils durch Querrillen 2 voneinander beabstandeten Profilblockelementen ausgebildet. Im dargestellten Ausführungsbeispiel sind die beiden in axialer Richtung A außen angeordneten Profilblockreihen jeweils mit in axialer Richtung A erstreckten Querrillen 2 ausgebildet. Beispielhaft sind in dieser Fig.7 die verschiedenen in den Figuren 1 bis 6 dargestellten Ausführungen von Profilblockelementen 1 mit den dort dort dargestellten unterschiedlichen Ausbildungen von Reihen 5 von Feineinschnitten eingezeichnet. So ist in der in Fig.7 links dargestellten äußeren Profilblockreihe das in der Darstellung gezeigte untere Profilblockelement mit der in Fig.1 dargestellten Ausbildung dargestellt. Der in Fig.7 rechts dargestellten äußeren Profilblockreihe oben dargestellte Profilblockelement entspricht der in Fig.2 dargestellten Ausbildung. Das in der rechten Profilblockreihe in mittlerer Position dargestellte Profilblockelement entspricht der in Fig.3 dargestellten Ausführung. Das in der rechten Profilblockreihe unten dargestellte Profilblockelement entspricht der in Fig.4 dargestellten Ausführung. Das in Fig.7 in der linken Profilblockreihe oben dargestellte Profilblockelement entspricht dem in Fig.5 dargestellten Profilblockelement. Das in Fig.7 in der linken Profilblockreihe in mittlerer Position dargestellte Profilblockelement entspricht dem in Fig.6 dargestellten Profilblockelement.

In einer Ausführung sind diese Profilblockelemente 1 in der in Fig.7 dargestellten Ausführung eines Reifens eingesetzt. In anderer - nicht dargestellter - Ausführung sind die Profilblockelemente einer ersten - beispielsweise linken - Profilblockreihe jeweils mit gleicher Ausbildung der Reihen5 der Profilblockelemente 1, beispielsweise alle gemäß der Ausbildung von Fig.1 oder alle gemäß der Ausbildung von Fig.2 usw. ausgebildet und die Profilblockelemente einer anderen - beispielsweise einer rechten - Profilblockreihe ebenfalls alle mit einer Ausführungsform der Reihen 5 der Profilblockelemente 1 - beispielsweise alle gemäß der Ausbildung von Fig.3 - ausgebildet.

In den in Fig.7 dargestellten mittleren Profilblockreihen sind die die Profilblockelemente der jeweiligen Profilblockreihe trennenden Querrillen 2 jeweils als Schrägrillen ausgebildet, deren Erstreckungsverlauf unter Einschluss eines Winkels größer 0° und kleiner 45° zur axialen Richtung A ausgebildet ist. Die Reihen 5 sind bei diesen Ausbildungen ebenfalls parallel zur Ausrichtung der Querrillen 2 ausgerichtet.

### Bezugszeichenliste

### (Teil der Beschreibung)

- 1: Profilblockelement
- 2: Querrille
- 3: Umfangsrille
- 4: Umfangsrille
- 5: Reihe
- 6: Feineinschnitt
- 7: Feineinschnitt
- 8: Schenkel
- 9: Schenkel
- 10: Schenkel
- 11: Schenkel
- 12: Knickstelle
- 13: Knickstelle
- 14: Knickstelle
- 15: Mittlerer Erstreckungsabschnitt
- 16: Mittlerer Erstreckungsabschnitt
- 17: Feineinschnitt
- 18: Radial äußere Oberfläche
- 19: Stufe
- 20: Feineinschnitt
- 21: Schenkel
- 22: Schenkel
- 23: Mittlerer Erstreckungsabschnitt

## Patentansprüche

1. Laufstreifenprofil eines Fahrzeugluftreifens mit radial erhabenen durch Rillen (2,3,4) begrenzten Profilpositiven (1) - wie Profilblockelementen oder Profilrippen -, welche in radialer Richtung R nach außen hin mit einer radial äußeren, die Bodenkontaktfläche bildenden Oberfläche (18) begrenzt werden, und mit in der radial äußeren Oberfläche (18) von Profilpositiven (1) ausgebildeten Feineinschnitten (6,7,20), welche in ihrem Erstreckungsverlauf in der radial äußeren Oberfläche (18) aus geradlinigen mit Knickstellen (12,13,14) verbundenen Erstreckungsabschnitten (8,9,10,11,15,16) ausgebildet sind,
bei dem in der radial äußeren Oberfläche (18) wenigstens eines Profilpositivs (1) wenigstens eine Reihe (5) von in axialer Richtung A nebeneinander angeordneter Feineinschnitte (6,7) ausgebildet sind, wobei diese Reihe von Feineinschnitten (6,7) jeweils längs ihrer Erstreckung mit der gleichen Anzahl N an geradlinigen Erstreckungsabschnitten (8,9,10,11,15,16) und mit (N-1) Knickstellen (12,13,14) ausgebildet sind, wobei der längs der Erstreckung des Feineinschnitts (6,7) in Erstreckungsrichtung der Reihe (5) erste geradlinige Erstreckungsabschnitt einen ersten Schenkel (8,10) und der letzte geradlinige Erstreckungsabschnitt einen zweiten Schenkel (9,11) bildet, und bei dem bei zwei in Erstreckungsrichtung der Reihe (5) benachbart hintereinander angeordneten Feineinschnitten (6,7) der Reihe (5) jeweils der zweite Schenkel (9) des vorgeordneten Feineinschnitts (6) und der erste Schenkel (10) des nachgeordneten Feineinschnitts (7) im Abstand a zueinander angeordnet, parallel zueinander ausgerichtet und längs ihrer Erstreckungsrichtung zumindest teilweise überlappt verlaufend ausgebildet sind,
wobei die beiden Schenkel (8,9,10,11) eines Feineinschnittes (6,7) einer Reihe (5) jeweils V-förmig einen Öffnungswinkel α mit einander einschließen mit 60° ≤α≤ 120°, wobei erste Feineinschnitte (6) und zweite Feineinschnitte (7) längs der Erstreckungsrichtung der Reihe (5) in alternierender Abfolge hintereinander angeordnet sind und wobei die Öffnung des von den beiden Schenkeln (8,9) der ersten Feineinschnitte (6) eingeschlossenen Winkels in entgegengesetzter Richtung zur Öffnung des von den beiden Schenkeln (10,11) der zweiten Feineinschnitte (7) eingeschlossenen Winkels ausgerichtet ist,
**dadurch gekennzeichnet,**
**dass** zwischen den beiden Schenkeln (8,9,10,11) der Feineinschnitte (6,7) der Reihe (5) jeweils ein geradliniger Erstreckungsabschnitt (15,16) ausgebildet ist, welcher an einem Erstreckungsende durch eine Knickstelle (13) mit dem einen Schenkel (8,10) und an seinem anderen Erstreckungsende durch eine Knickstelle (14) mit dem anderen Schenkel (9,11) verbunden ist, so dass der Feineinschnitt (6,7) mit seinem Verlauf in der radial äußeren Oberfläche (18) mit seinen Schenkeln (8,9,10,11), dem geradlinigen Erstreckungsabschnitt (15,16) und den beiden Knickstellen (13,14) eine offene Trapezform bildet.

2. Laufstreifenprofil gemäß den Merkmalen von Anspruch 1,
wobei die Schenkel (8,9,10,11) mit einer in Erstreckungsrichtung des jeweiligen Schenkels (8,9,10,11) gemessenen Erstreckungslänge L mit 2mm ≤L≤ 10mm ausgebildet sind.

3. Laufstreifenprofil gemäß den Merkmalen von einem der vorangegangenen Ansprüche,
wobei die Überlappung des zweiten Schenkels (9) eines vorgeordneten Feineinschnitts (6) und des ersten Schenkels (10) des nachgeordneten Feineinschnitts (7) einer Reihe (5) mit einer in Erstreckungsrichtung dieser beiden Schenkel (9,10) gemessenen Überlappungslänge K mit 2mm ≤K≤ L ausgebildet ist.

4. Laufstreifenprofil gemäß den Merkmalen von Anspruch 1,
wobei der mittlere, zwischen den Schenkeln (8,9,10,11) ausgebildete geradlinige Erstreckungsabschnitt (15,16) mit einer längs seiner Erstreckungsrichtung gemessenen Erstreckungslänge S mit 5mm ≤ S ≤ 15 mm ausgebildet ist.

## Claims

1. Tread profile of a pneumatic vehicle tyre with radially raised profile positives (1) - such as profile block elements or profile ribs -, which are delimited by grooves (2, 3, 4) and are outwardly bounded in the radial direction R by a radially outer surface (18), forming the ground contact surface, and with sipes (6, 7, 20), which are formed in the radially outer surface (18) of profile positives (1) and are formed in the course of their extent in the radially outer surface (18) by straight portions of extent (8, 9, 10, 11, 15, 16) connected by vertex points (12, 13, 14),
in which at least one row (5) of sipes (6, 7) arranged next to one another in the axial direction A are formed in the radially outer surface (18) of at least one profile positive (1), this row of sipes (6, 7) being formed along its extent with in each case the same number N of straight portions of extent (8, 9, 10, 11, 15, 16) and with (N-1) vertex points (12, 13, 14), the first straight portion of extent along the extent of the sipe (6, 7) in the direction of extent of the row (5) forming a first leg (8, 10) and the last straight portion of extent forming a second leg (9, 11), and in which, with two sipes (6, 7) of the row (5) arranged adjacently one behind the other in the direction of extent of the row (5), the second leg (9) in each case of the sipe (6) arranged in front and the first leg (10) of the sipe (7) arranged behind are arranged at the distance a from one another, aligned parallel to one another and formed at least partially overlapping one another along their direction of extent,
the two legs (8, 9, 10, 11) of a sipe (6, 7) of a row (5) respectively forming an opening angle α with one another in a V-shaped manner where 60° ≤ α ≤ 120°, first sipes (6) and second sipes (7) being arranged in alternating sequence one behind the other along the direction of extent of the row (5) and the opening of the angle enclosed by the two legs (8, 9) of the first sipes (6) being aligned in the opposite direction to the opening of the angle enclosed by the two legs (10, 11) of the second sipes (7),
**characterized**
**in that** between the two legs (8, 9, 10, 11) of the sipes (6, 7) of the row (5) there is formed in each case a straight portion of extent (15, 16), which is connected at one end of extent by a vertex point (13) to the one leg (8, 10) and at its other end of extent by a vertex point (14) to the other leg (9, 11), so that, with the course it follows in the radially outer surface (18), the sipe (6, 7) forms an open trapezoid form with its legs (8, 9, 10, 11), the straight portion of extent (15, 16) and the two vertex points (13, 14).

2. Tread profile according to the features of Claim 1, the legs (8, 9, 10, 11) being formed with a length of extent L, measured in the direction of extent of the respective leg (8, 9, 10, 11), where 2 mm ≤ L ≤ 10 mm.

3. Tread profile according to the features of one of the preceding claims,
the overlapping of the second leg (9) of a sipe (6) arranged in front and the first leg (10) of the sipe (7) arranged behind of a row (5) being formed with a length of overlap K, measured in the direction of extent of these two legs (9, 10), where 2 mm ≤ K ≤ L.

4. Tread profile according to the features of Claim 1, the middle, straight portion of extent (15, 16) formed between the legs (8, 9, 10, 11) being formed with a length of extent S, measured along its direction of extent, where 5 mm ≤ S ≤ 15 mm.

## Revendications

1. Sculpture de bande de roulement d'un pneumatique de véhicule comprenant des éléments de sculpture (1) en relief radialement et délimités par des rainures (2, 3, 4), tels que des éléments blocs de sculpture ou des nervures de sculpture, lesquels éléments de sculpture sont délimités dans la direction radiale R vers l'extérieur par une surface (18) radialement extérieure formant la surface de contact avec le sol, et comprenant des entailles étroites (6, 7, 20) formées dans la surface (18) radialement extérieure d'éléments de sculpture (1), lesquelles sont formées, dans leur tracé d'étendue dans la surface (18) radialement extérieure, à partir de parties d'étendue (8, 9, 10, 11, 15, 16) rectilignes reliées à des points d'inflexion (12, 13, 14),
dans laquelle, dans la surface (18) radialement extérieure d'au moins un élément de sculpture (1), au moins une rangée (5) d'entailles étroites (6, 7) juxtaposées dans la direction axiale A est formée, ces rangées d'entailles étroites (6, 7) étant formées respectivement le long de leur étendue de manière à présenter le même nombre N de parties d'étendue rectilignes (8, 9, 10, 11, 15, 16) et (N-1) points d'inflexion (12, 13, 14), la première partie d'étendue rectiligne le long de l'étendue de l'entaille étroite (6, 7) dans la direction d'étendue de la rangée (5) formant une première branche (8, 10) et la dernière partie d'étendue rectiligne formant une deuxième branche (9, 11), et dans laquelle, dans le cas de deux entailles étroites (6, 7) de la rangée (5) disposées l'une derrière l'autre de manière adjacente dans la direction d'étendue de la rangée (5), la deuxième branche (9) de l'entaille étroite en amont (6) et la première branche (10) de l'entaille étroite en aval (7) sont respectivement disposées à une distance a l'une de l'autre, orientées parallèlement l'une à l'autre et formées de manière à s'étendre au moins partiellement en chevauchement le long de leur direction d'étendue,
les deux branches (8, 9, 10, 11) d'une entaille étroite (6, 7) d'une rangée (5) formant respectivement en forme de V un angle d'ouverture α l'une avec l'autre, avec 60° ≤ α ≤ 120°, des premières entailles étroites (6) et des deuxièmes entailles étroites (7) étant disposées les unes derrière les autres suivant une séquence alternée le long de la direction d'étendue de la rangée (5), et l'ouverture de l'angle formé par les deux branches (8, 9) des premières entailles étroites (6) étant orientée en sens inverse à l'ouverture de l'angle formé par les deux branches (10, 11) des deuxièmes entailles étroites (7),
**caractérisée en ce**
**qu'**entre les deux branches (8, 9, 10, 11) des entailles étroites (6, 7) de la rangée (5) est formée respectivement une partie d'étendue rectiligne (15, 16), laquelle est reliée, à une extrémité d'étendue, à l'une des branches (8, 10) par un point d'inflexion (13) et, à son autre extrémité d'étendue, à l'autre branche (9, 11) par un point d'inflexion (14), de telle sorte que l'entaille étroite (6, 7) forme, par son tracé dans la surface (18) radialement extérieure, une forme trapézoïdale ouverte par ses branches (8, 9, 10, 11), la partie d'étendue rectiligne (15, 16) et les deux points d'inflexion (13, 14).

2. Sculpture de bande de roulement selon les
caractéristiques de la revendication 1,
les branches (8, 9, 10, 11) étant formées de manière à présenter une longueur d'étendue L mesurée dans la direction d'étendue de la branche (8, 9, 10, 11) respective, avec 2 mm ≤ L ≤ 10 mm.

3. Sculpture de bande de roulement selon les
caractéristiques de l'une des revendications précédentes,
le chevauchement de la deuxième branche (9) d'une entaille étroite en amont (6) et de la première branche (10) de l'entaille étroite en aval (7) d'une rangée (5) étant réalisé de manière à présenter une longueur de chevauchement K mesurée dans la direction d'étendue de ces deux branches (9, 10),
avec 2 mm ≤ K ≤ L.

4. Sculpture de bande de roulement selon les
caractéristiques de la revendication 1,
la partie d'étendue (15, 16) rectiligne centrale formée entre les branches (8, 9, 10, 11) étant formée de manière à présenter une longueur d'étendue S mesurée le long de sa direction d'étendue, avec 5 mm ≤ S ≤ 15 mm.
